# FASCICULE DE BREVET EUROPEEN

(11) **EP 1 726 678 B1**
(45) Date de publication et mention de la délivrance du brevet: **16.01.2013**
(21) Numéro de dépôt: 06114590.0
(22) Date de dépôt: 26.05.2006
(51) Int. Cl.: C22C 47/06, C22C 47/04, C22C 49/11, B22F 3/105

(54) **Procédé de fabrication d'une pièce tubulaire avec un insert en matériau composite à matrice métallique**
Verfahren zur Herstellung eines rohrförmigen Körpers mit einem Metall-Matrix-Verbundeinsatz
Process for fabricating a tubular body with a metal matrix composite insert

(30) Priorité: 27.05.2005 FR 0551406
(43) Date de publication de la demande: 29.11.2006
(73) Titulaire: SNECMA, 75015 Paris (FR)
(72) Inventeur: Franchet, Jean-Michel, 75018 Paris (FR); Klein, Gilles, 95540 Mery sur Oise (FR); Venard, Agathe, 92210 Saint Cloud (FR)
(74) Mandataire: David, Daniel

(56) Documents cités:
- EP-A- 1 352 984
- DE-A1- 2 147 735
- DE-A1- 4 021 547
- US-A- 5 222 296

## Description

L'invention concerne la fabrication d'une pièce tubulaire comportant un insert en matière composite à matrice métallique

Dans le domaine de l'aéronautique, notamment, un objectif constant est l'optimisation de la résistance des pièces pour une masse et un encombrement minimaux. C'est ainsi que certaines pièces peuvent désormais comporter un insert en matériau composite à matrice métallique. Un tel matériau composite comporte une matrice d'alliage métallique, par exemple d'alliage de titane Ti, dans laquelle s'étendent des fibres, par exemple des fibres céramiques de carbure de silicium SiC. De telles fibres présentent une résistance en traction bien supérieure à celle du titane (typiquement, 4000 MPa contre 1000 MPa). Ce sont donc les fibres qui reprennent les efforts, la matrice d'alliage métallique assurant une fonction de liant avec le reste de la pièce, ainsi que de protection et d'isolation des fibres, qui ne doivent pas entrer en contact les unes avec les autres. En outre, les fibres céramiques sont résistantes à l'érosion, mais doivent nécessairement être renforcées par du métal.

Ces matériaux composites peuvent être utilisés dans la fabrication de disques, d'arbres, de corps de vérins, de carters, d'entretoises, comme renforts de pièces monolithiques telles des aubes, etc.

Afin d'obtenir un tel insert de matériau composite, on forme préalablement des fils dits "fils enduits", comprenant une fibre de céramique enduite de métal. Le métal donne au fil l'élasticité et la souplesse nécessaires à sa manipulation. De préférence, un fil très fin de carbone ou de tungstène s'étend au centre de la fibre, le long de son axe, ce fil de carbone est enrobé de carbure de silicium, tandis qu'une fine couche de carbone est interposée entre la fibre et le métal, pour assurer une fonction de barrière de diffusion et de tampon lors de la relaxation thermique différentielle qui intervient au moment du refroidissement du métal liquide déposé sur la fibre.

La fabrication des fils de matériau composite, ou fils enduits, peut être effectuée de diverses manières, par exemple par dépôt de métal en phase vapeur sous un champ électrique, par électrophorèse à partir de poudre métallique ou encore par enduction de fibres céramiques au trempé dans un bain de métal liquide. Un tel procédé d'enduction de fibres céramiques, au trempé, dans un métal liquide, est présenté dans le brevet EP 0 931 846, au nom de la Demanderesse. La fabrication des fils selon ce procédé est rapide. On obtient ainsi des fils de matériau composite, ou fils enduits, qui servent de base à la fabrication de l'insert de matériau composite qui sera inclus dans la pièce.

Dans les procédés connus d'obtention d'une pièce avec un insert en matériau composite à matrice d'alliage métallique, le fil enduit est ensuite formé en une pièce que l'on nomme préforme. Une telle préforme est obtenue par bobinage du fil enduit entre deux flasques métalliques de maintien s'étendant autour d'un mandrin central. Le bobinage se fait en spirale, la préforme obtenue se présentant sous la forme d'un disque, dont l'épaisseur est celle du fil enduit la constituant. Afin d'assurer la cohésion de la préforme, les flasques de maintien comportent des ajours au travers desquels est pulvérisé un matériau remplissant une fonction de collage, par exemple une résine d'acrylique.

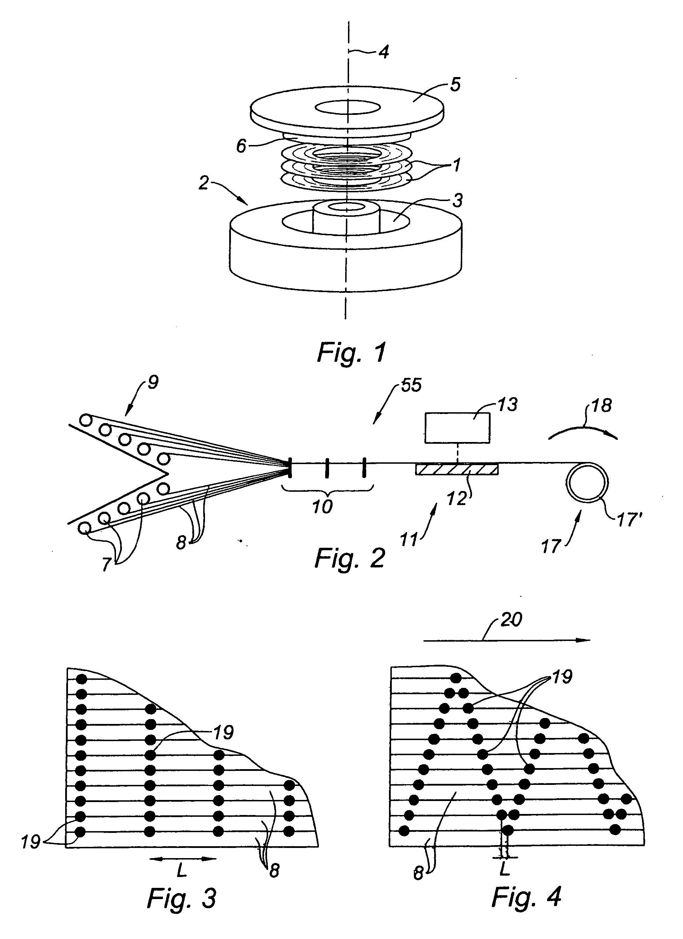

La figure 1 représente de manière schématique un mode de réalisation d'une pièce avec un insert en matériau composite. Une pluralité de préformes 1, chacune en forme de disque, sont empilées dans un conteneur 2, de forme globalement cylindrique. Le conteneur comporte une cavité annulaire 3, dont la forme en coupe transversale à l'axe 4 du conteneur est celle des préformes 1. Des préformes 1 sont empilées jusqu'à remplir toute la hauteur de la cavité 3. Typiquement, 80 préformes sont ainsi empilées. Cette opération est manuelle.

Il est alors nécessaire d'effectuer une opération de déliantage, suivie d'un dégazage, afin d'ôter le liant, par exemple une résine d'acrylique, des préformes 1. En effet, il ne doit rester aucun élément contaminant, à froid et à chaud, avec le titane, au stade de la compaction.

Un couvercle annulaire 5, comportant une saillie 6 de forme complémentaire à celle de la cavité annulaire, mais de dimension axiale plus faible, est rapporté sur le dessus du conteneur 2, la saillie 6 étant mise en contact avec la préforme 1 supérieure. Le couvercle 5 est soudé au conteneur 2, par exemple par soudage par faisceau d'électrons, l'ensemble étant de préférence mis sous vide. Il s'ensuit une étape de compaction isostatique à chaud de l'ensemble. Lors de cette dernière, l'insert composé de fil enduits juxtaposés est compacté, les gaines métalliques des fils enduits se soudent entre elles et avec les parois de la cavité 3 du conteneur 2, par diffusion, pour former un ensemble dense composé d'alliage métallique (par exemple un alliage de Titane), au sein de laquelle s'étendent annulairement les fibres de céramique (par exemple SiC).

On obtient une pièce cylindrique, comportant un insert d'un matériau composite, résultat de la compaction des préformes 1 empilées. Cette pièce peut éventuellement subir un traitement de relaxation des contraintes permettant de compenser la dilatation différentielle entre les fibres céramiques et le métal, dans lequel elles sont noyées, lors du refroidissement de l'ensemble.

La pièce est alors généralement usinée, de façon à obtenir la pièce finale.

Ce procédé de fabrication d'une pièce avec un insert en matériau composite présente de nombreux inconvénients, et est difficilement industriellement exploitable du fait de la longueur, de la complexité et de la précision requise de ses étapes.

Tout d'abord, les fibres de céramique étant fragiles, les opérations sur les fils enduits doivent avant tout empêcher tout contact entre elles, et le soudage de fils enduits n'a pas été envisagé jusqu'à présent.

En outre, les opérations de déliantage et de dégazage sont non seulement longues, mais on n'est jamais certain que la totalité du liant ait été enlevée. Afin de s'assurer de la complète disparition du liant, nécessaire notamment au bon comportement subséquent de l'alliage de Titane, plusieurs étapes de déliantage et dégazage sont nécessaires, ce qui augmente la durée et le coût globaux du procédé.

De surcroît, en cas de rupture du fil lors de son bobinage entre les deux flasques, il est nécessaire de former une nouvelle préforme, dans la mesure où il n'existe pas actuellement de moyens permettant de résoudre le problème et de reprendre le bobinage.

Par ailleurs, l'étape de positionnement des préformes de fil enduit dans le conteneur est actuellement manuelle. Le coût de l'opération et surtout sa précision s'en trouvent affectés. Or, le positionnement du fil enduit dans le conteneur est un facteur critique de la gamme de fabrication, dans la mesure où il conditionne les performances du matériau, avec une influence très importante de l'orientation de la fibre céramique en fonction des sollicitations principales de la pièce. Il conditionne également la qualité du matériau composite, par la conservation de l'intégrité de la fibre céramique, lors des différentes étapes de fabrication de la pièce. Il conditionne enfin le coût final de la pièce, de nouveau, du fait que les opérations de positionnement des fils enduits sont relativement longues et effectuées de manière manuelle. Le positionnement des fils dans le conteneur gagnerait donc à être amélioré.

Les techniques de l'art antérieur concernant la fabrication de pièces avec un insert en matériau composite proposent la fabrication de pièces annulaires, comme des disques de rotors. Il a été envisagé de fabriquer des pièces tubulaires, notamment des arbres de rotors, avec un insert en matériau composite, mais de grandes difficultés techniques interdisent la mise en oeuvre industrielle d'une telle fabrication. Un procédé a été envisagé, qui propose d'enfiler dans un fourreau des fils enduits, parallèles les uns aux autres, s'étendant longitudinalement entre deux mandrins formant le fourreau, puis de soumettre le tout à une compression isostatique à chaud. La mise en place des fils enduits s'avère très fastidieuse, voire impossible pour les derniers fils si l'on souhaite une grande densité de fils enduits. Par ailleurs, les risques de mauvais positionnement des fils, qui engendre leur détérioration et un mauvais comportement de la pièce, sont grands. On a aussi envisagé d'empiler des préformes de fils enduits sur toute la longueur du fourreau, mais les inconvénients d'un tel empilage ont été vus plus haut. Par ailleurs, il serait souhaitable que les fibres céramiques ne s'étendent pas transversalement à la pièce, pour une meilleure reprise des efforts.

Le document US 5,222,296 concerne un procédé de fabrication d'une pièce métallique renforcée par des fibres, dans lequel une bande continue de fibres céramiques unidirectionnelles dans une matrice métallique est découpée en plusieurs pièces séparées de longueur prédéterminée et les pièces séparées de fibres métalliques dans la matrice métallique sont disposées selon une spirale, alternativement bout à bout avec des pièces séparées de matrice non renforcée pour former une couronne qui comporte plusieurs couches.

Le document EP-A-1 352 984 montre la fabrication d'une nappe liée de fils enduits, les fils étant éventuellement liés ponctuellement (voir paragraphe 12) Cependant, à la lumière de la zone de fusion 24 de la figure 4, il n'y a dans ce document jamais soudage ponctuel dans la direction transversale, car la zone de fusion est au moins continue transversalement.

L'invention a pour objet un procédé permettant la fabrication d'une pièce tubulaire, comme un arbre de rotor de turbomachine, comportant un insert de matériau composite, qui puisse être mis en oeuvre de manière industrielle.

Conformément à l'invention le procédé de fabrication d'une pièce tubulaire, comportant un insert en matériau composite à matrice métallique, au sein de laquelle s'étendent des fibres céramiques, est définit à la revendication 1.

L'invention sera mieux comprise et d'autres caractéristiques apparaîtront à la lecture de la description qui suit en référence aux dessins en annexe sur lesquels
- la figure 1 représente une vue en perspective schématique d'une opération d'obtention d'une pièce avec un insert en matériau composite de l'art antérieur ;
- la figure 2 représente une vue schématique d'un dispositif de fabrication d'une nappe liée de fils enduits ;
- la figure 3 représente une vue schématique de dessus d'une nappe formée selon un premier mode opératoire du dispositif de la figure 2 ;
- la figure 4 représente une vue schématique de dessus d'une nappe formée selon un deuxième mode opératoire du dispositif de la figure 2 ;
- la figure 5 représente une vue schématique en coupe, dans un plan transversal à la direction de déroulement des fils enduits, au niveau du module de soudage par laser du dispositif de la figure 2, du soudage de deux fils entre eux ;
- la figure 6 représente une vue en perspective schématique d'une nappe de fils enduits à extrémités biseautées, pour la mise en oeuvre du procédé de fabrication d'une pièce tubulaire avec un insert en matériau composite ;
- la figure 7 représente une vue en perspective schématique du drapage de la nappe de la figure 6 autour d'un mandrin ;
- la figure 8 représente une vue en perspective schématique d'un dispositif de soudage par électrodes d'une nappe de fils enduits à un support métallique, au début du bobinage de la nappe sur un mandrin ;
- la figure 9 est un diagramme représentant schématiquement l'évolution de l'intensité du courant passant entre les électrodes, l'évolution de la pression exercée par les électrodes, ainsi que l'évolution de l'écrasement de la nappe, en fonction du temps, dans un procédé de soudage par électrodes d'une nappe de fils enduits à un support décrit dans la présente demande et
- la figure 10 représente de manière schématique le dispositif de la figure 8, en coupe, à la fin du bobinage de la nappe sur un mandrin.

On décrit tout d'abord un procédé de fabrication d'une nappe liée de fils enduits.

On réalise en premier une pluralité de fils enduits, selon l'une des techniques connues, de préférence par un procédé d'enduction de fibres céramiques, au trempé, dans un bain de métal liquide. Ces fils sont enroulés chacun sur une bobine. Chaque fil a par exemple un diamètre de 0,2 à 0,3 mm.

En référence à la figure 2, une pluralité de bobines 7, chacune avec un fil enduit 8 enroulé à sa circonférence, est disposée sur un module 9 de bobines 7. Ce module 9 permet de placer les bobines 7 de telle sorte qu'elles puissent être dévidées en direction d'un module d'ourdissage, présenté ci-après, sans que les fils 8 ne se croisent. En l'espèce, le module de bobines 9 comporte une structure en triangle isocèle supportant les bobines 7, pour moitié sur un côté du triangle et pour moitié sur l'autre côté, la pointe du triangle étant dirigée du côté vers lequel les fils 8 des bobines 7 sont dévidés, vers un lieu situé sur l'axe de symétrie du triangle que forme la structure du module de bobines 9.

Selon une autre forme de réalisation, chaque bobine 7 peut supporter un faisceau de fils enduits. Ainsi, pour former une nappe de cent fils enduits, on peut utiliser dix bobines 7 comportant chacune un faisceau de dix fils enduits enroulé à sa circonférence.

Les fils enduits 8 sont dévidés en direction d'un module 10 d'ourdissage. Ce module d'ourdissage 10 est ici représenté de façon schématique et non détaillée, car sa structure est accessible à l'homme du métier. Il est comparable à un module d'ourdissage utilisé dans le domaine du tissage. Le module d'ourdissage 10 comprend des moyens de guidage permettant de disposer les fils 8, tendus, parallèlement les uns aux autres, en une couche dans un même plan, sans chevauchement entre eux, en contact les uns avec les autres. L'objectif est de constituer une nappe plane de fils 8 parallèles en contact les uns avec les autres.

Les fils 8 ainsi ourdis sont entraînés dans un module 11 de soudage par laser. Ce module comporte un support 12 plan sur lequel se déplacent les fils 8, au-dessus duquel est monté un dispositif 13 de soudage par laser. Les fils 8 sont donc entraînés devant le dispositif de soudage par laser 13. L'ensemble est de préférence contenu dans une atmosphère neutre, par exemple dans une atmosphère d'argon projeté par une buse. Le dispositif 13 de soudage par laser peut par exemple comporter un laser de type YAG (Yttrium Aluminium Garnet) dopé au néodyme (Nd), qui présente l'avantage d'une grande précision quant à sa puissance et au point d'impact de son faisceau laser, ainsi que l'avantage d'une grande finesse du faisceau. Le laser présentera ici de préférence une puissance comprise entre 2 et 5 W.

En aval du module de soudage par laser 11, les fils 8 sont entraînés par un module 17 d'entraînement des fils 8, depuis le module de bobine 9, en translation sur le support 12. Ce module d'entraînement 17 comporte en l'espèce une bobine 17' rotative autour de laquelle les fils 8 sont enroulés. La bobine 17' est entraînée en rotation, comme représenté par la flèche 18. Ainsi, les fils 8 sont entraînés depuis leur bobine 7 du module de bobines 9, le long du module d'ourdissage 10 et du module de soudage par laser 11, par le module d'entraînement 17, l'ensemble formant un dispositif 55 de formation d'une nappe liée de fils enduits 8. La nappe liée est enroulée sur la bobine 17' du module d'entraînement.

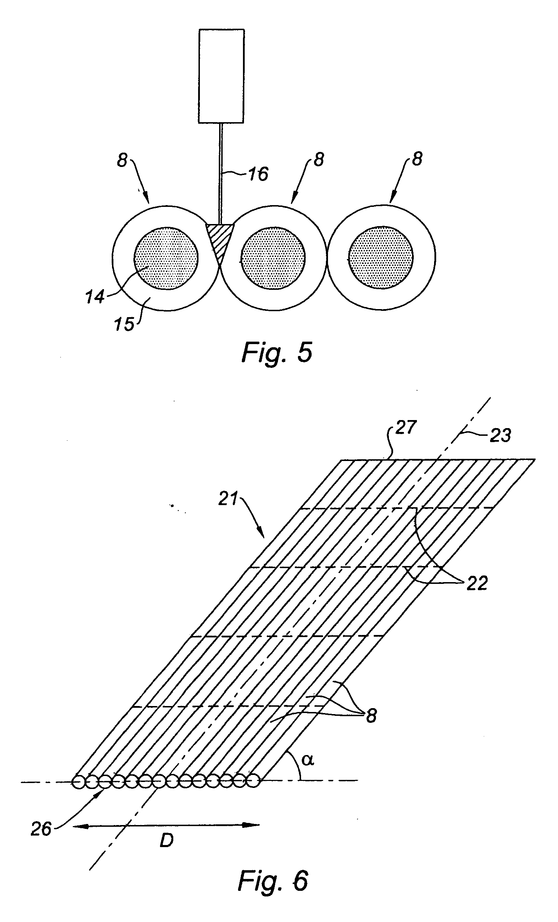

On voit sur la figure 5 une représentation en coupe, dans un plan transversal à la direction de déroulement des fils 8, au niveau du module de soudage par laser 11, du soudage de deux fils 8 entre eux. Le soudage effectué est un soudage par points par le dispositif de soudage par laser 13. Chaque fil 8 est solidarisé à ses voisins au niveau d'une pluralité de points de soudure. Chaque fil 8 comporte, comme on l'a vu précédemment, une fibre céramique 14, enrobée d'une gaine de métal 15, par exemple un alliage de Ti. Le faisceau laser est dirigé, comme représenté par la flèche 16, dans la direction d'un point de contact entre deux fils 8 successifs, perpendiculairement au plan contenant globalement les axes des fils 8 entraînés sur le support 12. Il s'ensuit une fusion locale de leur gaine de métal 15. On utilise le laser à faible puissance, par ailleurs très concentrée, de manière à s'assurer que la fibre céramique 14 ne soit pas affectée par cette fusion locale. Un volume minimum de la gaine métallique 15 est fondu. Il suffit à assurer la solidarisation des fils 8 à cet endroit. Les paramètres du soudage sont optimisés de telle sorte que le bain de soudage résultant de la fusion du métal ne soit pas débouchant.

Il est important que le faisceau laser soit dirigé sur une zone ponctuelle chevauchant deux fils 8, perpendiculairement au plan des fils 8, de manière qu'il n'endommage pas les fibres de céramique 14, dont l'intégrité est une condition nécessaire à la fonction qui leur est assignée, dans l'application à la fabrication d'une pièce avec un insert en matériau composite.

Il n'est pas nécessaire que les points de soudure soient très résistants. Leur fonction est uniquement d'assurer une solidarisation globale, ou maintien, des fils 8 entre eux, en vue de constituer une nappe liée. Cette solidarisation doit juste être assez forte pour permettre la manutention de la nappe, ses éventuels bobinage et débobinage, en vue par exemple de la constitution d'une pièce avec un insert en matériau composite. Il s'agit donc d'un soudage de maintien des fils 8 entre eux.

Les figures 3 et 4 représentent de façon schématique deux modes opératoires envisagés pour le module de soudage par laser 11, en l'espèce pour la formation d'une nappe de douze fils enduits 8.

Dans le mode opératoire de la figure 3, lorsque les fils enduits 8 sont situés sous le dispositif de soudage par laser 13, le module d'entraînement 17 est arrêté, afin de laisser les fils 8 immobiles. Le dispositif de soudage 13 effectue alors une série de points de soudure entre les fils 8 voisins, le long d'un segment perpendiculaire à leur axe de défilement sous le dispositif de soudage 13. A cet effet, le dispositif de soudage 13 effectue un premier point de soudure 19 entre deux fils 8, comme exposé ci-dessus en référence à la figure 5. Il est alors arrêté et déplacé, perpendiculairement à la direction de défilement des fils 8, jusqu'au droit du point de contact suivant entre deux fils 8, qu'il soude selon un deuxième point de soudure 19, et ainsi de suite, jusqu'à ce que tous les fils 8 soient solidarisés entre eux le long de ce segment de déplacement. Le dispositif de soudage 13 effectue donc un segment de points de soudure 19, perpendiculaire à l'axe de défilement des fils 8 sous le dispositif de soudage 13. Le module d'entraînement 17 est alors actionné de manière à faire défiler les fils 8 sur une longueur "L" devant le dispositif de soudage 13, puis l'opération est répétée sur un autre segment, parallèle au premier.

Dans le mode opératoire de la figure 4, les fils 8 sont entraînés de manière continue, dans la direction et le sens de défilement représentés par la flèche 20, mouvement imposé par le module d'entraînement 17. Le dispositif de soudage 13 effectue les mêmes opérations que précédemment, à savoir un soudage, puis le déplacement vers le point suivant selon une trajectoire perpendiculaire à la direction 20 du mouvement des fils 8, etc., depuis le premier fil 8 vers le dernier, puis inversement. Si la vitesse de déplacement des fils 8 est suffisamment faible, le soudage des points 19 entre deux fils en mouvement 8 est possible. On obtient donc une série de points de soudure 19 entre les fils 8, qui forme un zigzag sur la nappe formée par les fils 8.

Il est également possible d'obtenir une telle répartition des points de soudure 19 en zigzag en arrêtant le module d'entraînement 17 lors du soudage de chaque point de soudure 19, le module d'entraînement 17 entraînant les fils 8 sur une faible distance "1" entre chaque point de soudure 19, tandis que le dispositif de soudage 13 est déplacé.

Il est également possible de n'opérer qu'un ralentissement du mouvement des fils 8 au moment du soudage des points 19.

L'avantage d'une telle répartition des points de soudure 19 est sa plus grande homogénéité sur la surface de la nappe constituée par les fils 8.

Quoi qu'il en soit, en sortie du module de soudage par laser 11, les fils 8 se présentent sous la forme d'une nappe liée, au sein de laquelle ils sont solidarisés les uns aux autres au niveau des points de soudure 19 de maintien. La nappe est enroulée sur la bobine 17' du module d'entraînement 17.

Il n'est pas fait référence ici à la phase d'initialisation du procédé de fabrication d'une nappe liée de fils enduits 8. Cette phase peut être adaptée librement par l'homme du métier, par exemple en enroulant en début de procédé les fils 8 sur la bobine 17' sans qu'ils soient solidarisés les uns aux autres, la portion la plus intérieure de la nappe bobinée fmale n'étant donc pas sous forme de nappe, ou par exemple en entraînant les fils en début de procédé grâce à un autre dispositif d'entraînement et en les reliant à la bobine 17' lorsqu'ils commencent à se présenter sous forme de nappe.

La distance "L" entre les segments de points de soudure 19, dans le cadre de la configuration en segments de la figure 3, ou encore la distance longitudinale "1" entre deux points de soudure 19 successifs, dans la configuration en zigzag de la figure 4, est dimensionnée en fonction de la rigidité souhaitée pour la nappe de fils enduits 8. Ainsi, pour une nappe rigide, les points de soudure 19 seront rapprochés les uns des autres, pour une nappe souple, les points de soudure 19 seront éloignés les uns des autres. D'autres configurations de répartition des points de soudure 19 sont bien sûr envisageables. La configuration et les espacements des points 19 seront choisis en fonction de l'application à laquelle est destinée la nappe liée, notamment si elle doit être bobinée, vrillée, ... tout en respectant un espacement minimum pour assurer la cohésion de l'ensemble dans les conditions définies de l'application. Les spécifications relatives à la configuration de la répartition des points de soudure 19 sont moins liées au procédé lui-même qu'à l'application à laquelle la nappe de fils enduits 8 est destinée.

Grâce à la vitesse d'exécution du soudage laser et à sa précision, il est possible d'assurer la fabrication d'une nappe liée de fils enduits 8, les fils 8 étant solidarisés les uns aux autres, dans un système automatisé, industriellement, pour la mise en oeuvre du procédé qui vient d'être décrit. On obtient ainsi rapidement de grandes quantités de nappes de fils enduits 8 - on peut former plusieurs kilomètres d'une même nappe - se présentant sous une forme exploitable de diverses manières. Par ailleurs, les nappes sont solidarisées par fusion de la gaine de métal 15 des fils 8, donc sans apport de matière, notamment sans apport de liant tel qu'une colle, ce qui permet de supprimer, dans un procédé plus global de fabrication d'une pièce avec un insert de matériau composite utilisant des fils enduits, toutes les étapes de déliantage.

On décrit maintenant un procédé de fabrication, conforme à la présente invention, d'une pièce tubulaire avec un insert en matériau composite à matrice métallique.

En référence à la figure 6, on a donc formé une nappe 21 de fils enduits 8, comportant ici quatorze fils parallèles les uns aux autres, solidarisés par un procédé de formation d'une nappe tel que celui représenté sur la figure 3. Ainsi, les fils 8 sont reliés par des points de soudure s'étendant le long de segments 22 parallèles les uns aux autres et perpendiculaires à l'axe global 23 de la nappe 21 (c'est-à-dire perpendiculaires aux axes des fils 8 lorsque ces derniers s'étendent de façon rectiligne). Les extrémités de la nappe 21 sont coupées en biseau, de façon à obtenir des segments 26, 27 d'extrémité de la nappe 21 de largeur "D", formant un angle "α" avec l'axe 23 de la nappe 21.

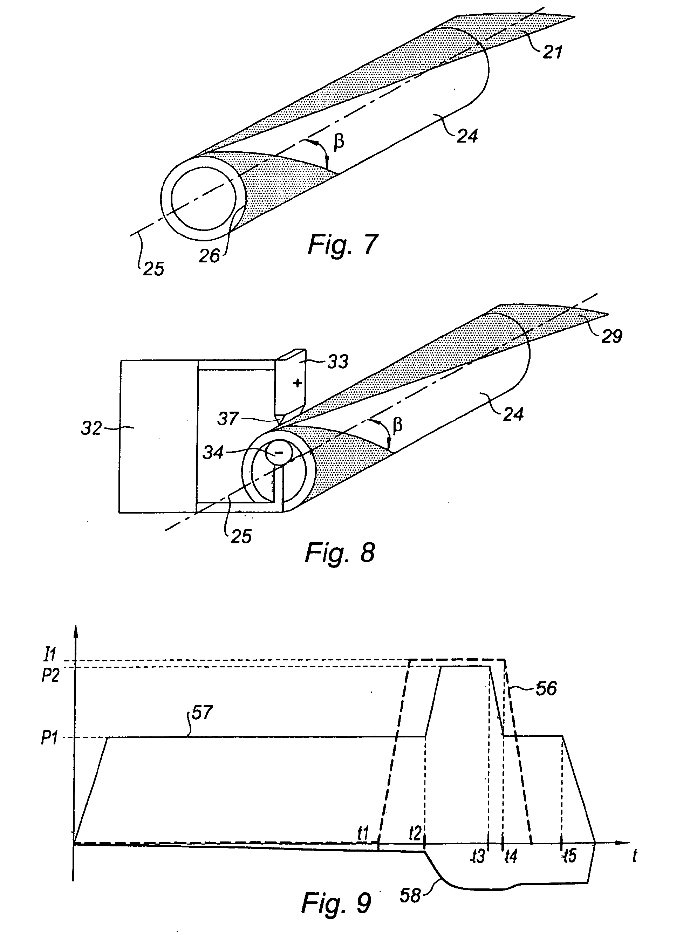

En référence à la figure 7, la nappe 21 ainsi biseautée est drapée sur un mandrin 24 cylindrique. Ce mandrin 24 est un tube métallique creux, de préférence dans le même métal que celui dont sont enduites les fibres de céramique des fils enduits 8, ici un alliage de Titane. Il présente un périmètre externe circulaire dont la valeur est égale à la valeur de la largeur "D" des extrémités biseautées de la nappe 21. La nappe 21 est, préalablement au drapage, enroulée, par l'un de ses segments d'extrémité 26, autour d'une extrémité du mandrin 24, puis drapée de manière hélicoïdale autour du mandrin 24, drapage hélicoïdal possible du fait de l'angle α entre l'axe 23 de la nappe 21 et les segments 26, 27 formant les extrémités biseautées de la nappe 21, notamment le segment 26 qui est préalablement enroulé autour d'une extrémité du mandrin 24. Les bords longitudinaux de la nappe 21 forment un angle β (avec β = π/2 - α) avec l'axe 25 du mandrin 24. La nappe 21 est drapée tout autour du mandrin 24, recouvrant intégralement sa surface externe, sans chevauchement des fils enduits 8 de la nappe 21 entre eux. Les bords longitudinaux de la nappe 21 sont mis en contact les uns avec les autres, successivement à chaque tour du drapage. Finalement, la nappe 21 a été conçue et ses segments 26, 27 d'extrémité biseautés de façon à ce que ses dimensions correspondent à la surface développée du mandrin 24.

En fonction de l'épaisseur de l'insert en matériau composite à matrice métallique qui est souhaité dans la pièce finale, il est possible de draper une pluralité de nappes 21 autour du mandrin 21, les unes sur les autres. De préférence, lorsqu'une nappe est drapée autour de la nappe 21 précédente, son positionnement initial à l'extrémité du mandrin 24 est effectué de telle manière qu'une fois la nouvelle nappe drapée, chacun de ses fils enduits 8 s'étendent entre deux fils enduits 8 de la nappe précédente, en quinconce, ce qui assure une meilleure compacité de l'ensemble. Par ailleurs, il est possible de décaler angulairement les nappes 21 afin qu'en outre les courbes de jonction de leurs bords longitudinaux soient décalées les unes des autres, de préférence le plus éloignées possible (chaque courbe de contact entre deux bords longitudinaux peut par exemple s'étendre à équidistance des deux courbes proximales de la nappe précédente). Il va de soi que les dimensions de chaque nouvelle nappe 21 doivent être ajustées en fonction du nombre de nappes 21 qui ont déjà été drapées. Le nombre de fils composant chaque nappe supplémentaire peut aisément se calculer, connaissant les dimensions des fils unitaires, du périmètre du mandrin et du nombre de couches déjà drapées. De préférence, l'extrémité du mandrin 24, où sont initialement positionnées et enroulées les nappes 21, comporte un rebord formant butée axiale, de dimension radiale, soit égale à l'épaisseur du nombre totale de nappes 21, soit supérieure. Il peut en être de même pour l'autre extrémité.

L'angle α est déterminé par l'homme du métier en fonction des contraintes et divers modes de sollicitation (centrifuge, traction, torsion, compression, ...) auxquels va être soumise la pièce finale. En effet, ce sont principalement les fibres de céramique qui reprennent les efforts, leur orientation et leur répartition ayant une influence déterminante sur le comportement de la pièce. Il est ainsi possible d'adapter l'angle α, le diamètre des fils enduits 8, le diamètre des fibres céramiques, etc., en fonction de l'application considérée. Dans le cas d'espèce considéré, α est pris égal à 45°.

Il est éventuellement possible, si une pluralité de nappes 21 est drapée autour du mandrin 24, de prévoir des angles α différents pour ces nappes 21. Il est toutefois conseillé, dans ce cas, d'utiliser des fils enduits 8 dont la gaine métallique est d'épaisseur importante, afin de bien protéger les fibres céramiques s'étendant en leur sein.

Afin d'assurer le drapage des nappes 21, ces dernières sont solidarisées, soit au mandrin 24, s'il s'agit de la première nappe 21, soit à la nappe précédente, s'il s'agit d'une nappe 21 ultérieure, en début de drapage, lorsque l'extrémité 26 de la nappe 21 est enroulée autour de l'extrémité du mandrin 24 ou de la nappe précédente. Le drapage est mis en oeuvre, et l'autre extrémité de la nappe 21 est solidarisée à l'ensemble de manière similaire. De préférence, on utilise un procédé de soudage par contact entre deux électrodes et passage d'un courant moyenne fréquence, tel que celui qui sera présenté plus loin, pour souder une fine bande des parties d'extrémité de la nappe 21. Tout autre procédé peut être mis en oeuvre.

Selon une autre forme de réalisation, le soudage d'une nappe 21 au mandrin 24 ou à la nappe précédente peut être effectué le long d'une ligne longitudinale par rapport au mandrin 24, de préférence selon un procédé de soudage par contact entre deux électrodes et passage d'un courant moyenne fréquence, tel que décrit plus loin.

Une fois le nombre désiré de nappes 21 drapées autour du mandrin 24 atteint, l'ensemble est inséré dans un fourreau, de diamètre interne égal au diamètre externe de cet ensemble. Ce fourreau est de préférence constitué du même alliage métallique que l'enrobage des fibres des fils enduits 8, ici un alliage de Titane. Il est complémentaire avec les rebords formant butées axiales du mandrin 24, de sorte que l'ensemble, qui est de préférence bouché à chacune de ses extrémités par des plaques métalliques circulaires, soit homogène et se présente sous la forme d'un cylindre. Les plaques circulaires et le fourreau sont de préférence soudés par soudage par faisceau d'électrons, de manière à constituer un conteneur étanche ; ces plaques sont de préférence en alliage de Titane. Le soudage par faisceau d'électrons permet de faire préalablement le vide à l'intérieur du fourreau. L'ensemble formé est alors compacté de manière isostatique à chaud.

Lors de la compaction isostatique à chaud, qui se fait par exemple sous une pression de 1000 bar à 950°C, l'alliage de Titane est amené à diffuser et à créer la matrice métallique du matériau composite, au sein de laquelle s'étendent les fibres de céramique. L'alliage de Titane étant visqueux à haute température, il autorise un bon flux de diffusion de la matière, sans endommager les fibres de céramiques, lors de la formation de la matrice métallique. On obtient ainsi, dans le cas d'espèce considéré, un arbre, comportant une épaisseur interne d'alliage de Titane, correspondant au mandrin 24, un insert central de matériau composite à matrice d'alliage de Titane, dans lequel s'étendent les fibres céramiques de manière hélicoïdale, et une épaisseur externe d'alliage de Titane, correspondant au fourreau.

Cet arbre peut être usiné, en fonction de la pièce finale désirée. De préférence, les extrémités de l'arbre, avec les plaques métalliques et éventuellement un ou des rebords de butée axiale des nappes, sont supprimées, afin d'obtenir un arbre uniforme sur l'ensemble de sa longueur. Un tel arbre présente l'avantage d'une très bonne résistance aux efforts, du fait de l'insert en matériau composite, qui autorise que l'épaisseur totale de sa paroi soit nettement inférieure à celle des arbres classiques. Cette faible épaisseur implique, outre un gain de masse considérable, un faible encombrement, utile dans les applications nécessitant la présence de nombreux arbres coaxiaux. L'arbre présente par ailleurs une très bonne résistance à la corrosion, puisque son constituant de base est ici un alliage de Titane, dont le comportement par rapport à la corrosion est bien meilleur que celui de l'acier, par exemple. Sans la présence des fibres céramiques, l'alliage de Titane seul n'aurait toutefois pas présenté une résistance aux efforts suffisante.

Le procédé décrit peut être mis en oeuvre industriellement, du fait de sa simplicité et fiabilité d'exécution, d'autant plus si l'on met en oeuvre les procédés de formation de nappes par soudage laser par points et de soudage par contact d'électrodes décrits plus loin. Les nappes formées par soudage par laser présentent, comme nous l'avons déjà vu, l'avantage d'être résistantes, d'ailleurs à résistance modulable, aisément manipulables et exemptes de tout matériau d'adjonction, par exemple de colle, ce qui supprime les opérations de déliantage et dégazage et permet d'obtenir directement un drapage ne contenant que de l'alliage de Ti et des fibres céramiques.

Dans le procédé, décrit ci-dessus, de fabrication d'une pièce tubulaire avec un insert de matériau composite, il est avantageux, au moins en début et en fin de procédé, de solidariser la nappe, soit au support métallique sur lequel elle est enroulée, soit à la nappe de la couche inférieure.

Les procédés, connus à ce jour, de solidarisation de fils enduits, proposent la projection d'une colle sur les fils, dont les inconvénients ont été relevés plus haut. Les procédés comprenant une étape de soudage des nappes sont par ailleurs généralement évités, car ils se heurtent à de nombreuses difficultés de mise en oeuvre, dont la plus importante est la nécessité d'éviter tout endommagement des fibres céramiques s'étendant au sein des fils enduits. Ces fibres peuvent présenter un diamètre de 100 à 200 µm, ou plus, et sont particulièrement fragiles en flexion et en cisaillement. Tout endommagement de la fibre céramique d'un fil enduit annihile les avantages inhérents à ce fil.

On décrit ci-après un procédé et un dispositif de soudage localisé d'un fil enduit ou d'une nappe liée ou d'un faisceau de fils enduits à un support métallique, le support s'entendant, soit d'un support métallique au sens propre, soit d'un autre fil enduit ou d'une autre nappe ou d'un autre faisceau de fils enduits. Ce procédé et ce dispositif permettent d'obtenir une solidarisation du fil ou de la nappe ou du faisceau au support, tout en préservant l'intégrité des fibres céramiques s'étendant au sein du ou des fils. Le procédé et le dispositif autorisent également la réparation des fils en cas de rupture lors d'un procédé de bobinage ou de drapage.

En référence à la figure 8, une nappe 29 de fils enduits 8, par exemple formée par le procédé de formation d'une nappe présenté plus haut, est destinée à être liée au mandrin 24. A cet effet, on souhaite solidariser la nappe 29 au mandrin 24, en début de bobinage. On utilise pour cela un dispositif 31 de soudage par contact entre deux électrodes et passage d'un courant moyenne fréquence. Les fils enduits 8 s'étendent le long de la périphérie externe du mandrin 24. La nappe 29 comporte ici dix fils.

Le dispositif 31 de soudage par électrodes comporte un générateur moyennes fréquences 32, relié à une électrode positive 33 et une électrode négative 34. Dans la forme de réalisation de la figure 8, l'électrode positive 33 et l'électrode négative 34 s'étendent suivant l'axe du mandrin 24. Leur forme en coupe est uniforme sur toute cette largeur.

L'électrode positive 33, qui peut par exemple être en cuivre ou en tungstène, comporte une portion d'extrémité 37 biseautée. Cette portion d'extrémité 37 est conformée de façon à ce que les lignes de courant, convergent au maximum de manière à passer le long d'une ligne, ou bande, de contact, entre l'électrode positive 33 et la nappe 29 de fils enduits 8, la plus étroite possible. Cette portion d'extrémité 37 est arrondie, de façon à ne pas cisailler les fils 8, ce qui risquerait de les endommager. Le rayon de cette portion d'extrémité 37 est choisi de manière à obtenir la meilleure convergence possible des lignes de courant, sans toutefois être trop faible, afin de ne pas cisailler les fils 8.

L'électrode négative 34 est également conformée de manière à minimiser sa surface de contact avec le mandrin 24 auquel la nappe 29 doit être soudée, afin de faire converger les lignes de courants 38 le long d'une ligne, ou bande, la plus étroite possible. En effet, la géométrie du mandrin 24, ici tubulaire, permet d'utiliser une électrode négative 34 cylindrique, réduisant ainsi la surface de contact à une génératrice, ce qui est favorable à la convergences des lignes de courant.

Un tel agencement des électrodes 33, 34 assure le soudage subséquent, de la nappe 29 au mandrin 24, le long d'une bande très étroite. La concentration de courant est constante dans cette bande.

Le procédé de soudage par électrodes comporte la particularité de combiner le chauffage du métal de la nappe 29 avec un léger forgeage, obtenu par mise sous pression de la nappe 29 par les électrodes 33, 34. La puissance et le temps du chauffage et de la mise sous pression sont avantageusement pilotés, pour obtenir un échauffement minimal du métal, son forgeage, et réaliser ainsi un soudage, à l'état solide.

Le chauffage de la nappe 29 est obtenu par passage du courant dans la nappe 29 et le mandrin 24, entre l'électrode positive 33 et l'électrode négative 34, du fait de l'intensité pilotée générée par le générateur moyennes fréquences 32. La pression sur la nappe 29 est ici obtenue par mise sous pression par l'électrode positive 33 qui remplit ainsi une seconde fonction, de presse. La forme arrondie de sa portion d'extrémité 37 revêt toute son importance pour cette fonction, puisqu'il ne faut pas cisailler les fils 8 de la nappe 29.

On voit sur la figure 9 un diagramme représentant l'évolution de l'intensité du courant passant entre les électrodes 33, 34, sur la courbe 56, en pointillés, et l'évolution de la pression exercée par l'électrode positive 33, sur la courbe 57, en traits pleins au-dessus de l'axe des abscisses, en fonction du temps "t". On voit également une courbe 58, en traits pleins en dessous de l'axe des abscisses, représentant l'écrasement de la nappe 29.

Le déroulement du procédé de soudage par électrodes ici décrit est le suivant. Comme nous venons de le préciser, il s'agit d'un procédé de soudage à l'état solide. L'électrode positive 33 et l'électrode négative 34 sont mises en contact, respectivement, avec la nappe 29 de fils enduits 8 et la surface intérieure du mandrin 24. Dans une première phase, seule une pression est appliquée sur les fils enduits 8, entre les deux électrodes 33, 34. La pression est amenée à une valeur P1, qui est conservée jusqu'à un instant t1. P1 sera de préférence comprise entre 50 et 100 W. La fonction de cette phase de mise sous pression "à froid" est d'assurer la bonne mise en contact des fils enduits 8, à la fois entre eux et sur les parois du mandrin 24. Dans le cas étudié plus loin où l'on soude au moins deux couches de fils enduits 8 ensemble, il s'agit, pendant cette phase, de manière similaire, d'assurer la mise en contact de tous les fils concernés entre eux (une couche de fils remplissant le rôle de support pour l'autre). Cette bonne mise en contact garantit le bon passage du courant lors de la phase suivante.

Dans une deuxième phase, à l'instant t1, alors que la pression reste constante et égale à P1, l'intensité est portée à une valeur I1. I1 sera de préférence comprise entre 500 et 1500 A. Cela entraîne l'échauffement du métal enrobant les fibres de céramique des fils enduits 8 et le début du soudage.

Dans une troisième phase, à un instant t2, la pression est portée à une valeur P2 supérieure à P1, afin de mettre en oeuvre un forgeage supplémentaire des fils enduits 8 de la nappe 29. On peut noter sur la courbe 58 que l'écrasement de la nappe 29, qui était faible et régulier jusqu'à l'instant t2, s'amplifie du fait du forgeage supplémentaire, c'est-à-dire de l'action conjuguée du passage du courant (donc du chauffage) et de la pression plus importante. Le soudage se produit alors.

Dans une quatrième phase, à partir d'un instant t3, la pression est redescendue à sa valeur P1.

Dans une cinquième phase, dès l'instant t4 où la pression a repris sa valeur P1, l'intensité est remise à zéro, tandis que la pression est conservée à sa valeur P1, afin de maintenir le soudage qui se refroidit, jusqu'à un instant t5, début de la dernière phase de remise à zéro de la pression exercée par les électrodes 33, 34 et de fin du procédé.

On peut noter, sur la courbe 58, que lors des quatrième, cinquième et dernière phase, l'écrasement de la nappe 29 peut être amené à légèrement diminuer (c'est-à-dire que l'épaisseur de la nappe augmente à nouveau légèrement) par un effet d'élasticité. L'écrasement se fait généralement sur 0,05 à 0,15 mm.

Ainsi, du fait de ce procédé de soudage par contact entre deux électrodes, les gaines métalliques des fils enduits 8 sont échauffées localement, soudées et forment des liaisons entre elles et avec leur support, dans le cas qui vient d'être présenté avec la surface externe du mandrin 24, le long d'une bande fine suivant la zone de contact entre la portion d'extrémité 37 de l'électrode positive 33 et la nappe 29. Ce soudage se fait sans affecter les fibres de céramique. Plus précisément, le passage du courant à moyenne fréquence conduit à une température locale telle que le matériau constituant la gaine des fils enduits 8 reste à l'état solide mais atteint le domaine de soudage (et de forgeage) du matériau, la température de fusion du matériau n'étant pas atteinte. La force appliquée par l'électrode, typiquement de l'ordre de 10 DaN, permet d'activer le soudage. On obtient ainsi, le long de cette bande, une épaisseur de métal monolithique au sein de laquelle s'étendent les fibres céramiques, qui n'ont pas été affectées par l'opération de soudage.

On obtient ainsi une solidarisation de la nappe 29 au mandrin 24, qui permet d'initier le procédé de drapage. Cette solidarisation n'est pas nécessairement très résistante, il s'agit d'une bande de soudure de maintien, suffisante pour l'application à laquelle elle est destinée, ici le drapage d'une nappe 29 de fils enduits 8 sur un mandrin 24.

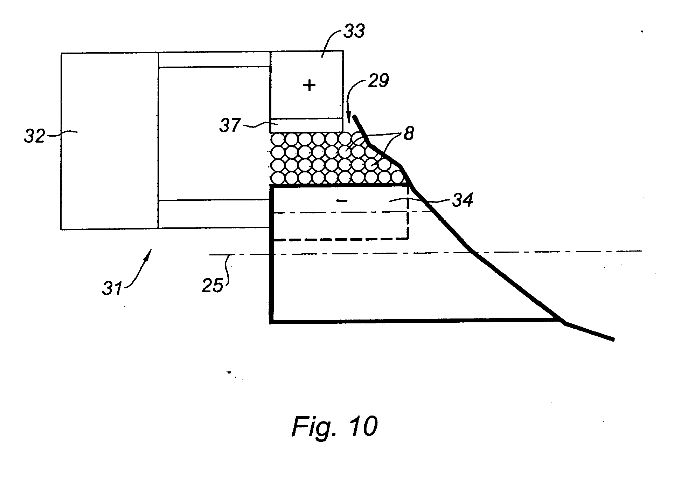

En référence à la figure 10, la même opération est réalisée en fin de drapage, afin de souder la fin de la nappe 29 à la couche inférieure de la nappe 29, située juste sous elle. Le procédé de soudage par contact mis en oeuvre est similaire. L'intensité générée par le générateur moyennes fréquences 32 et la pression exercée par l'électrode positive 33 sont optimisées de manière à ce que, de préférence, seules les deux couches extérieures de la nappe 29 soient soudées l'une à l'autre, formant en quelque sorte, le long de la bande soudée, une couche monolithique au sein de laquelle s'étendent les deux séries de fibres céramiques, sur une faible largeur. Il n'est pas exclu de souder plusieurs couches de la nappe 29 ensemble. Cela ne présente pas forcément d'inconvénients. En effet, si le drapage est destiné à former un insert dans une pièce, l'ensemble sera de toute manière compacté par la suite. Quoi qu'il en soit, les énergies sont maîtrisées pour contrôler la profondeur de nappe soudée. Le courant passe de l'électrode positive 33 vers l'électrode négative 34, à travers toutes les couches de la nappe 29 et le mandrin 24. La phase de mise sous pression « à froid » permet d'assurer le contact des couches pour un bon passage du courant.

Il est également possible de prévoir de former une bande de soudure transversale à l'axe du mandrin 24, en appliquant le dispositif transversalement ; l'extrémité biseautée 37 de l'électrode positive 33 peut alors être de forme concave, le mandrin 24 étant tourné de façon à ce qu'une bande de soudure soit effectuée sur toute la périphérie de son extrémité.

Le procédé de soudage par contact d'un ou plusieurs fils enduits permet également d'envisager la réparation d'un fil ou d'une nappe ou d'un faisceau de fils en cas de rupture lors de son bobinage ou de son drapage. Dans l'art antérieur, lorsqu'un fil était bobiné, sa rupture entraînait l'annulation du procédé et son redémarrage pour un nouveau bobinage, le fil qui avait été bobiné et cassé étant perdu. Le procédé de soudage par contact permet de souder les extrémités cassées du fil, ou de la nappe, et de reprendre le bobinage, ou le drapage.

## Revendications

1. Procédé de fabrication d'une pièce tubulaire, comportant un insert en matériau composite à matrice métallique, au sein de laquelle s'étendent des fibres céramiques, **caractérisé par le fait que**
- il comporte une étape de drapage, autour d'un mandrin métallique (24), d'une nappe (21) liée de fils enduits, chaque fïl (18) comportant une fibre céramique (14) enrobée d'une gaine métallique (15), et les fils étant liés par des points de soudure (19), la nappe (21) comportant des extrémités biseautées et présentant des dimensions correspondant à la surface développée du mandrin (24), dans laquelle une extrémité biseautée de la nappe est enroulée autour d'une extrémité du mandrin (24), puis la nappe est drapée autour de la circonférence du mandrin de manière hélicoïdale et
- le mandrin (24) et la nappe (21) liée de fils enduits sont insérés dans un fourreau métallique, et l'ensemble subit une compaction isostatique à chaud.

2. Procédé de fabrication d'une pièce tubulaire selon la revendication 1, qui comprend au moins une étape supplémentaire de drapage d'une nappe liée de fils enduits autour d'une nappe déjà drapée.

3. Procédé de fabrication d'une pièce tubulaire selon l'une des revendications 1 ou 2, dans lequel, avant la compaction isostatique à chaud, on soude à chaque extrémité du mandrin une plaque métallique circulaire.

4. Procédé de fabrication d'une pièce tubulaire selon l'une des revendications 1 à 3, dans lequel la ou les nappes (21) liées sont formées par un procédé de fabrication d'une nappe selon lequel les fils enduits (8) sont ourdis et entraînés, côte à côte, par un module d'entraînement, devant un dispositif de soudage par laser (13), qui forme des points de soudure (19) entre les fils adjacents.

5. Procédé de fabrication d'une pièce tubulaire selon l'une des revendications 1 à 4, dans lequel la nappe est solidarisée au mandrin ou à une nappe déjà drapée selon un procédé de soudage par contact entre deux électrodes (33, 34) et passage d'un courant moyenne fréquence, dans lequel on applique une électrode sur la nappe et une électrode à son support et on fait passer du courant pour induire un soudage par diffusion à l'état solide.

6. Procédé de fabrication d'une pièce tubulaire selon la revendication 5, dans lequel la nappe est solidarisée en début et en fin de drapage à ses extrémités.

7. Procédé de fabrication d'une pièce tubulaire selon l'une des revendications 5 et 6, dans lequel la nappe est solidarisée le long d'une bande longitudinale.

## Claims

1. Process for manufacturing a tubular component comprising an insert made of a metal matrix composite, within which ceramic fibers extend, **characterized in that**
- it includes a draping step, in which a bonded sheet (21) of coated filaments is draped around a metal mandrel (24), each filament comprising a ceramic fiber coated with a metal sheath, and the filaments being bonded by spot welds, the sheet (21) comprising beveled ends and having dimensions corresponding to the developped surface of the mandrel (24), in which a beveled end of the sheet is wound around one end of the mandrel (24) and then the sheet is draped in a helical manner around the circumference of the mandrel, and
- the mandrel (24) and the bonded sheet (21) of coated filaments are inserted into a metal sheath and the whole assembly is compacted by hot isostatic pressing.

2. Process for manufacturing a tubular component according to claim 1, which includes at least one additional step of laying up a bonded sheet of coated filaments around an already draped sheet.

3. Process for manufacturing a tubular component according to one of claims 1 or 2, in which, before the hot isostatic pressing, each end of the mandrel is welded to a circular metal plate.

4. Process for manufacturing a tubular component according to one of claims 1 to 3, in which the bonded sheet or sheets (21) are formed by a process for manufacturing a sheet in which the coated filaments (8) are warped and driven, side by side, by a drive module, past a laser welding device (13), which forms spot welds (19) between the adjacent filaments.

5. Process for manufacturing a tubular component according to one of claims 1 to 4, in which the sheet is fastened to the mandrel or to an already draped sheet using a contact welding process between two electrodes (33, 34) and passage of a medium-frequency current, in which an electrode is applied to the sheet and an electrode is applied to its support, and current is made to pass in order to induce welding by solid-state diffusion.

6. Process for manufacturing a tubular component according to claim 5, in which the sheet is fastened at its ends both at the start and at the finish of the draping.

7. Process for manufacturing a tubular component according to either of claims 5 and 6, in which the sheet is fastened along a longitudinal band.

## Patentansprüche

1. Verfahren zur Herstellung eines rohrförmigen Teils, das einen Einsatz aus Verbundmaterial mit metallischer Matrix aufweist, in deren Innern sich keramische Fasern erstrecken, **dadurch gekennzeichnet, dass**
- es einen Schritt des Drapierens, um einen metallischen Dorn (24) herum, einer verbundenen Matte (21) aus beschichteten Drähten aufweist, wobei jeder Draht (8) eine keramische Faser (14) aufweist, die mit einer metallischen Hülle (15) ummantelt ist, und wobei die Drähte durch Schweißpunkte (19) verbunden sind, wobei die Matte (21) abgefaste Enden aufweist und Abmessungen aufweist, die der abgewickelten Oberfläche des Dorns (24) entsprechen, wobei ein abgefastes Ende der Matte um ein Ende des Dorns (24) herum gewickelt wird und dann die Matte spiralförmig um den Umfang des Dorns herum drapiert wird, und
- der Dorn (24) und die verbundene Matte (21) aus beschichteten Drähten in eine Metallumhüllung eingesetzt werden, und die Anordnung eine isostatische Heißverdichtung erfährt.

2. Verfahren zur Herstellung eines rohrförmigen Teils nach Anspruch 1, das zumindest einen weiteren Schritt des Drapierens einer verbundenen Matte aus beschichteten Drähten um eine bereits drapierte Matte herum umfasst.

3. Verfahren zur Herstellung eines rohrförmigen Teils nach einem der Ansprüche 1 oder 2, wobei, vor der isostatischen Heißverdichtung, an jedem Ende des Dorns eine kreisförmige Metallplatte angeschweißt wird.

4. Verfahren zur Herstellung eines rohrförmigen Teils nach einem der Ansprüche 1 bis 3, wobei die verbundene(n) Matte oder Matten (21) durch ein Verfahren zur Herstellung einer Matte gebildet wird bzw. werden, wonach die beschichteten Drähte (8) angeschärt und, Seite an Seite, durch ein Mitnahmeelement, vor eine Laserschweiß-Vorrichtung (13) mitgenommen werden, die Schweißpunkte (19) zwischen den benachbarten Drähten bildet.

5. Verfahren zur Herstellung eines rohrförmigen Teils nach einem der Ansprüche 1 bis 4, wobei die Matte mit dem Dorn oder einer bereits drapierten Matte gemäß einem Schweißverfahren durch Kontakt zwischen zwei Elektroden (33, 34) und Durchleitung eines Mittelfrequenzstroms fest verbunden wird, wobei eine Elektrode an die Matte und eine Elektrode an ihre Halterung angelegt wird und Strom durchgeleitet wird, um ein Festkörperdiffusionsschweißen zu induzieren.

6. Verfahren zur Herstellung eines rohrförmigen Teils nach Anspruch 5, wobei die Matte am Anfang und am Ende des Drapierens an ihren Enden fest verbunden wird.

7. Verfahren zur Herstellung eines rohrförmigen Teils nach einem der Ansprüche 5 und 6, wobei die Matte entlang eines längsgerichteten Streifens fest verbunden wird.
